# EUROPEAN PATENT APPLICATION

(11) **EP 3 381 549 A1**
(43) Date of publication of application: **03.10.2018**
(21) Application number: 17163405.8
(22) Date of filing: 28.03.2017
(51) Int. Cl.: B01J 20/20, B01J 20/28, B01J 20/32, C01B 25/027

(54) **STORAGE MATERIAL CONTAINING WHITE PHOSPHORUS OR YELLOW ARSENIC**

(71) Applicant: Universität Regensburg, 93053 Regensburg (DE)
(72) Inventor: SCHEER, Manfred, 93055 Regensburg (DE); SEITZ, Andreas Erich, 81827 München (DE); KASKEL, Stefan, 01159 Dresden (DE); HIPPAUF, Felix, 01097 Dresden (DE)
(74) Representative: Dr. Gassner & Partner mbB

(57) **Abstract**

The invention relates to a storage material containing white phosphorus (P₄) or yellow arsenic (As₄), wherein said white phosphorus or said yellow arsenic is stored in said storage material, wherein said storage material is activated carbon containing said white phosphorus or yellow arsenic in its pores or cavities.

## Description

The invention relates to a storage material in which the metastable white phosphorus (P₄) or the metastable yellow arsenic (As₄) is stored. The invention further concerns a method for producing such a P₄ or As₄ comprising storage material, a method for releasing P₄ or As₄ from the storage material and a use of the storage material for storage of As₄ or P₄ in lightness and/or in air and/or for a chemical reaction of As₄ or P₄.

White phosphorus is a form of elemental phosphorus consisting of tetrahedral P₄ molecules, in which each atom is bound to the other three atoms by a single bond. Owing to its high reactivity, its metastable character and its toxicity it has to be handled very carefully. White phosphorus inflames in air spontaneously and converts slowly under influence of light into red phosphorus. Therefore, white phosphorus is usually stored under water and in the dark. The high reactivity of white phosphorus is a big problem when shipping white phosphorus.

The structure of yellow arsenic is similar to the structure of white phosphorus. Its four atoms are also arranged in a tetrahedral structure in which each atom is bound to each of the others of the three atoms by a single bond. It is unstable and toxic. Yellow arsenic is rapidly transformed at room temperature and/or under light into grey arsenic which is sometimes also entitled "gray arsenic". Though yellow arsenic cannot be stored practically as a solid, freshly generated solutions of As₄, e. g. in toluene, can be used for chemical reactions if the As₄ is immediately reacted further.

In the literature there are only few examples for the storage of the tetrahedral structures of P₄ and As₄. Mal, P. et al., Science, vol. 324, 2009, pages 1697 to 1699 discloses an inclusion of P₄ molecules in self-assembled tetrahedral capsules. Crystals of these capsules are stable in air. P₄ can be released from these capsules by use of benzene or cyclohexane. The release is restricted to specific solvents, the molecules of which can compete with P₄ as guest molecules of the capsules. For example, it is not possible to extract P₄ from the capsules with n-heptane.

Choi, W. et al., Dalton Trans., vol. 45, 2016, pages 6357 to 6360 discloses the encapsulation of P₄ in a re-usable metal-organic framework (MOF). P₄ was directly synthesized from red phosphorus and trapped by gas phase diffusion. According to the authors the storage material "loaded" with white phosphorus seems to be not light stable. P₄ could be released under vacuum and with d₅-nitrobenzene.

Schwarzmaier, C. et al., Angew. Chem. Int. Ed., 2013, 52, pages 10896 to 10899 discloses a stabilization of tetrahedral P₄ and As₄ molecules as guests in polymeric and spherical aggregates by means of copper halogenides and [(C₅(CH₃)₅)Fe(η⁵-P₅)]. Crystals of these compounds are stable in air and vis-à-vis light. However, P₄ and As₄ cannot be released from these crystals by use of usual solvents but only by specific chemical reactions, in particular chemical reactions resulting in a decomposition of the P₄ or As₄ containing aggregates.

The problem to be solved by the present invention is to provide an alternative P₄ or As₄ containing storage material which allows a storage of As₄ and P₄ in the air for a limited time and in lightness and which allows an easy and almost complete release of the stored molecules from the storage material. The storage of P₄ in air shall be such that it does not ignite spontaneously. Furthermore, a method for producing the P₄ or As₄ containing storage material, a method for releasing P₄ or As₄ from the storage material and a use of the storage material shall be given.

The problem is solved by the features of claims 1, 6, 13 and 15. Embodiments of the invention are subject-matter of claims 2 to 5, 7 to 12 and 14.

According to the invention a storage material containing white phosphorus (P₄) or yellow arsenic (As₄) is provided, wherein said white phosphorus or said yellow arsenic is stored in said storage material, wherein said storage material is activated carbon containing the P₄ or As₄ in its pores or cavities. Activated carbon is a form of carbon processed to have small, low-volume pores or cavities. The surface area of activated carbon is at least 300 m²/g, in particular at least 1.300 m²/g, as determined by gas adsorption. Activated carbon usually has micropores having a diameter below 2 nm, mesopores having a diameter of 2 to 50 nm and macropores having a diameter of more than 50 nm. The activated carbon of the storage material can be any activated carbon containing micropores or micropores and mesopores.

The common feature of P₄ and As₄ is the tetrahedral structure and the similar size of the molecules. The molecules have an average diameter of about 0.6 nm to 0.7 nm. The structure and the size allow a storage of the molecules in those pores or cavities of activated carbon that have a size corresponding to the size of the molecules. Pores or cavities of such a size are usually present at least in a small amount in each activated carbon.

In contrast to known storage materials activated carbon is chemically inert. Therefore, it is possible to use the P₄ or As₄ containing storage material according to the invention directly for chemical reactions of P₄ or As₄ without side reactions of the storage material.

A further advantage vis-à-vis known storage materials for P₄ or As₄ is that it can be provided in relative big amounts of at least several grams at reasonable costs whereas the storage materials known from Mal et al., Schwarzmaier et al. or Choi et al. have to be synthesized. Depending on the kind of these storage materials syntheses usually result only in small amounts of a few milligrams up to 300 mg of the storage material. The storage materials known in the art can store up to 13% by weight of P₄. The activated carbon can store at least 1 %, in particular at least 20% by weight and even more of P₄ and at least 1 %, in particular at least 10% by weight and even more of As₄.

The inventors further found that the As₄ and the P₄ stored in the activated carbon resists light as well as air for a limited time. In particular the P₄ stored in the activated carbon does not ignite spontaneously when contacted with air. The P₄ or As₄ containing storage material according to the invention can be used for shipping and/or storage of P₄ or As₄ without essential security problems. Therefore, the storage material containing P₄ or As₄ can well be used for a commercial distribution of P₄ or As₄.

A further advantage vis-à-vis known storage materials for As₄ and P₄ is that the stored P₄ or As₄ can be extracted from the storage material with usual organic solvents such as carbon disulfide (CS₂), n-hexane, toluene, dichloromethane or tetrahydrofuran (THF). After release of P₄ or As₄ from the storage material according to the invention the remaining activated carbon can be used again for producing the P₄ or As₄ containing storage material according to the invention.

Activated carbon is characterized by a big inner surface and a large amount of pores or cavities enabling such a big inner surface. According to the invention a mean diameter of the pores or cavities of the activated carbon as determined by N₂ physisorption is less than 50 nm, in particular between 0.3 and 50 nm, in particular between 0.4 and 2 nm, in particular between 0.5 and 0.8 nm, in particular between 0.5 and 0.7 nm. The mean diameter is the arithmetic mean diameter. Since the As₄ and the P₄ molecules have a diameter of about 0.6 nm to 0.7 nm these molecules fit well into these pores or cavities. It is assumed that the amount of As₄ and P₄ that can be stored in a specific activated carbon is the higher the higher the amount of these pores or cavities in the activated carbon is.

The mean diameter of the pores or cavities determined by N₂ physisorption can be calculated by means of density functional theory (DFT) which is a subdomain of statistical physics. Furthermore, the share of pores of a specific diameter or range of diameters in the total pores can be determined by means of DFT.

The activated carbon can be dried activated carbon, in particular activated carbon dried by heating the activated carbon under vacuum, in particular by heating at a temperature of at least 80 °C and below 200 °C, in particular by heating at a temperature of at least 100 °C and below 150 °C. The drying should be performed immediately before storage of the P₄ or As₄ in the activated carbon to ensure that there is no or nearly no water in the activated carbon when contacting the activated carbon with the molecules to be stored. It is assumed that at least a part of the pores or cavities relevant for the storage of P₄ and As₄ is occupied with water if the material is not dried before the storage. The heating may occur for at least 5 hours, in particular for at least 6 hours, in particular for at least 7 hours, in particular for at least 8 hours, in particular for at least 9 hours, in particular for at least 10 hours.

The storage material according to the invention may contain at least 1% by weight P₄ or As₄, in particular at least 7.5%, in particular at least 10%, by weight As₄ or in particular at least 5%, in particular at least 10%, in particular at least 15%, in particular at least 17.5%, in particular at least 20%, by weight P₄.

The invention further concerns a method for producing the P₄ or As₄ containing storage material according to the invention, wherein the method comprises the following steps:
a1) Dissolving As₄ or P₄ in an organic solvent,
b1) contacting a resulting solution of As₄ or P₄ with the activated carbon,
c1) separating the activated carbon containing the As₄ or P₄ from the solution and
d1) drying the separated activated carbon
or the following steps
a2) sublimating or evaporating phosphorus or arsenic in an inert gas and
b2) contacting the P₄ or As₄ containing gas phase resulting from step a2) with the activated carbon.

The organic solvent may be an ether, in particular a cyclic ether, in particular tetrahydrofuran (THF).

The P₄ may be dissolved in the organic solvent in step a1) by dissolving white phosphorus in the organic solvent. The As₄ or P₄ may also be dissolved in the organic solvent in step a1) by sublimation of arsenic or phosphorus by heating the arsenic or phosphorus in an inert gas and introducing the resulting As₄ or P₄ containing inert gas into the organic solvent, e. g. by blowing the inert gas into the solvent and/or by vigorous mixing the inert gas and the organic solvent, e. g. by vigorous stirring. The inert gas may be N₂ or a noble gas, in particular argon.

In one embodiment the arsenic is sublimated at about 750 °C and the resulting As₄ vapor is introduced into THF at 20 °C by use of a stream of argon blown into the THF. The resulting solution of As₄ may be filtered prior to step b1), i.e. prior to contacting the resulting solution of As₄ with the activated carbon.

The phosphorus sublimated or evaporated for the generation of P₄ to be dissolved in the organic solvent in step a1) or sublimated or evaporated in step a2) may be white, violet, black or red phosphorus. The red phosphorus or black phosphorus usually converts upon heating to a temperature of 550 °C to 620 °C into violet phosphorus before sublimation. At a normal pressure sublimation usually occurs at 620 °C. White phosphorus usually melts at 44.2 °C and evaporates at 280.5 °C at normal pressure.

The arsenic sublimated for the generation of As₄ to be dissolved in the organic solvent in step a1) or the arsenic sublimated in step a2) may be grey arsenic or amorphous or orthorhombic black arsenic which converts into grey arsenic at a temperature of about 270 °C to 300 °C. Sublimation usually occurs at 616 °C at normal pressure.

Step b2) can be performed at least at 20 °C, in particular at least at 25 °C, in particular at least at 30 °C and/or below 200 °C.

The contacting of the solution of As₄ or P₄ with the activated carbon according to step b1) can comprise stirring and/or shaking of the solution together with the activated carbon. The stirring and/or shaking may occur for at least 10, in particular at least 15, in particular at least 17, in particular at least 19, in particular at least 21, in particular at least 23, hours.

Steps a1) and b1) or a2) and b2) and/or sublimation of arsenic or phosphorus for the generation of As₄ or P₄ to be dissolved in the organic solvent in step a1) are usually performed in the dark to prevent a conversion of As₄ into grey arsenic or of P₄ into red phosphorus before it is incorporated in the activated carbon. Performance in the dark is particular important in case of producing an As₄ containing storage material, since As₄ is very sensitive to light. Performance in the dark is less important in case of producing a P₄ containing storage material since P₄ is less light sensitive.

Step b1) may be performed at a temperature between 2 and 40 °C, in particular between 10 and 25 °C.

After the separation of the activated carbon containing the As₄ or P₄ from the solution according to step c1), e. g. by centrifugation or decantation, and before performing step d1) the activated carbon can be washed with a hydrocarbon, in particular n-pentane or n-hexane.

The drying of the separated activated carbon according to step d1) may be performed under vacuum.

The invention further concerns a method for releasing P₄ or As₄ from the P₄ or As₄ containing storage material according to the invention, wherein the storage material is extracted with the organic solvent or a further organic solvent. The further organic solvent may be carbon disulfide (CS₂), n-hexane, toluene, dichloromethane or tetrahydrofuran (THF).

The invention further concerns a use of the P₄ or As₄ containing storage material according to the invention for storage of As₄ or P₄ in lightness and/or in air and/or for a chemical reaction of As₄ or P₄.

In the following the invention is illustrated by means of examples.
- Fig. 1: shows schematically an apparatus for the generation of a solution of As₄ or P₄.
- Fig. 2: shows schematically a device for contacting activated carbon with dissolved As₄ or P₄.
- Fig. 3: shows schematically an apparatus for the direct generation of a storage material according to the invention.

### Example 1:

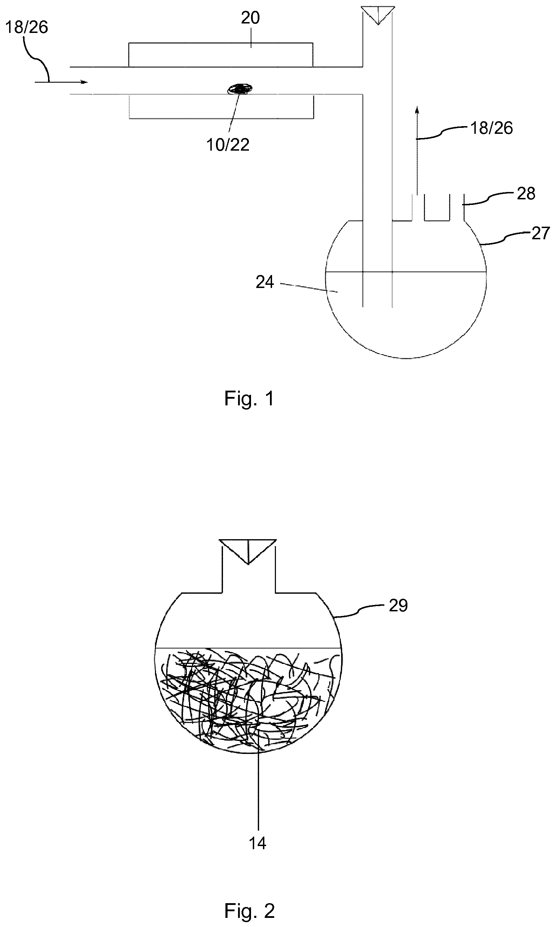

The porous carbon substrate Norit DLC Super 50, purchased from Cabot Norit Nederland BV, was activated by keeping it at 140 °C under high vacuum for 10 hours. A solution of P₄ and a separate solution of As₄ was generated by dissolving P₄ 10 or As₄ 22 in a defined volume of THF 24. As shown in Fig. 1 a solution of arsenic was prepared by sublimation of grey arsenic 22 in an oven 20 at 750 °C and introducing the resulting As₄ vapor into THF 24 in a first bulb 27 by use of a stream of argon 26 or another inert gas 18 at room temperature. The resulting solution of As₄ was removed from the first bulb 27 via the outlet 28.

A solution of phosphorus was prepared in an analog way by sublimation of red phosphorus 10 in an oven 20 at 750 °C and introducing the resulting P₄ vapor into THF 24 by use of a stream of argon 26 or another inert gas 18 at room temperature. Alternatively, the solution of P₄ can be prepared by dissolving white phosphorus (i. e. solid P₄) in THF 24. Each of these solutions was added separately to a separate portion of the activated carbon 14 in a separate second bulb 29 and stirred in the dark at room temperature under an atmosphere of nitrogen. This is shown schematically in Fig. 2.

24 hours later the black suspensions were centrifuged and the supernatants were decanted. In both cases the remaining black solid was washed with n-pentane and subsequently dried under vacuum.

The resulting dry powders were analyzed by means of NMR-spectroscopy, X-ray powder diffraction, physisorption, N₂ adsorption isothermy and thermogravimetry. All results showed that the P₄ and the As₄ are present in the pores or cavities of the carbon substrates, respectively. The tetrahedral structure of the molecules is stabilized in the pores or cavities of the carbon substrates and a reaction with oxygen from the air seems not to occur or to occur only to a very little extend in the pores or cavities. It was shown that the storage material could be stored in the air and in lightness for three weeks with only very little oxidative decomposition of the P₄ or As₄ stored in the storage material. It was further shown that the P₄ containing storage material according to the invention does not ignite spontaneously when contacted with air. This shows the stability of the P₄ or As₄ in the P₄ or As₄ containing storage material according to the invention.

To demonstrate the release of the As₄ or P₄ from the As₄ or P₄ containing storage material the storage material was extracted with usually used organic solvents such as carbon disulfide (CS₂), n-hexane, toluene, dichloromethane or tetrahydrofuran (THF). The stored molecules could be extracted easily. The extracted P₄ or As₄ could be used for chemical syntheses.

Furthermore, it was examined whether the As₄ or P₄ containing storage material according to the invention could be used directly in chemical reactions. For this purpose the formation of the As₄ or P₄ butterfly complexes as known from Heinl, S. and Scheer, M., Chem. Sci., 2014, 5, pages 3221 to 3225 was used as a model reaction. The model reaction showed that the P₄ or As₄ containing storage material reacted with the complex forming compounds stoichiometrically resulting in the selective formation of the expected organometallic butterfly complexes.

### Example 2:

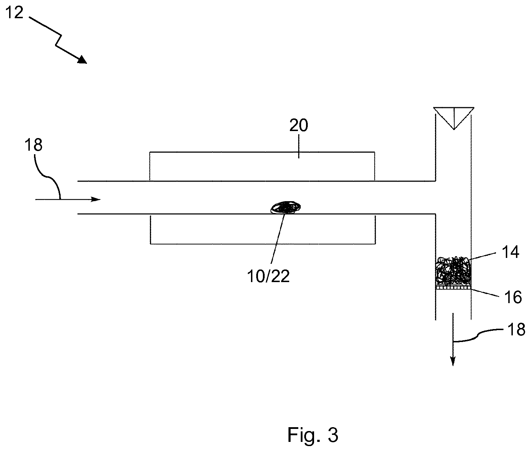

200 mg of red phosphorus 10 and in a separate procedure 200 mg of grey arsenic 22 are placed in an inert apparatus 12 as schematically shown in Fig. 3. 1g of carbon (Norit DLC Super 50) activated by keeping it at 140 °C under high vacuum for 10 hours is placed on top of a glass frit 16. Afterwards, an inert gas 18 like N₂ or Ar is heated to 450 °C and conducted through the inert apparatus 12 as shown in Fig. 3. The oven 20 is heated to a temperature of about 750 °C resulting in a sublimation of the red phosphorus 10 or the grey arsenic 22. The resulting P₄ or the As₄ containing gas flow is passed through the activated carbon 14 on the glass frit 16. The activated carbon 14 is kept between 20 °C and 50 °C by cooling. After about 20 minutes the red phosphorus 10 or the grey arsenic 22 is completely sublimed and the storage material according to the invention is formed from the activated carbon 14 by incorporation of the P₄ or As₄ generated by sublimation of the red phosphorus 10 or grey arsenic 22. The storage material according to the invention is removed from the apparatus 12.

### Example 3:

1 g of carbon (Norit DLC Super 50) activated by keeping it at 140 °C under high vacuum for 10 hours is placed in a glass ampoule at one end of the glass ampoule. The glass of the glass ampoule may consist of quartz glass or comprise tantalum or other materials. 200 mg of red phosphorus 10 and in a separate procedure 200 mg of grey arsenic 22 are placed at the other end of the glass ampoule. Then an inert gas 18 like N₂ or Ar is filled in the tube and the tube is sealed with a slightly reduced pressure inside the tube. Afterwards the tube is completely placed into an oven 20. It is heated to a temperature of about 750 °C until the red phosphorus 10 or the grey arsenic 22 is completely sublimated, i. e. for about 12 hours. The storage material according to the invention is formed from the activated carbon 14 by incorporation of the P₄ or As₄ generated by sublimation of the red phosphorus 10 or the grey arsenic 22. Then the ampoule is cooled down to room temperature and opened. The storage material according to the invention is removed from the ampoule.

### List of reference numbers

- 10: Red phosphorus
- 12: apparatus
- 14: activated carbon
- 16: glass frit
- 18: inert gas
- 20: oven
- 22: grey arsenic
- 24: THF
- 26: argon
- 27: first bulb
- 28: outlet
- 29: second bulb

## Claims

1. Storage material containing white phosphorus (P₄) or yellow arsenic (As₄), wherein said white phosphorus or said yellow arsenic is stored in said storage material, **characterized in that** said storage material is activated carbon containing said white phosphorus or yellow arsenic in its pores or cavities.

2. Storage material according to claim 1, **characterized in that** a mean diameter of the pores or cavities of the activated carbon as determined by N₂ physisorption is between 0.3 and 50 nm, in particular between 0.4 and 2 nm.

3. Storage material according to claim 2, **characterized in that** the mean diameter determined by N₂ physisorption is calculated by means of density functional theory.

4. Storage material according to any of the preceding claims, **characterized in that** the activated carbon is dried activated carbon, in particular activated carbon dried by heating the activated carbon under vacuum, in particular by heating at a temperature of at least 80 °C and below 200 °C, in particular by heating for at least 5 hours.

5. Storage material according to any of the preceding claims, **characterized in that** it contains at least 1 % by weight As₄ or P₄.

6. Method for producing the P₄ or As₄ containing storage material as specified in any of the preceding claims, **characterized in that** the method comprises the following steps:
a1) Dissolving As₄ or P₄ in an organic solvent,
b1) contacting a resulting solution of As₄ or P₄ with the activated carbon,
c1) separating the activated carbon containing the As₄ or P₄ from the solution and
d1) drying the separated activated carbon
or the following steps
a2) sublimating or evaporating phosphorus or arsenic in an inert gas and
b2) contacting the P₄ or As₄ containing gas phase resulting from step a2) with the activated carbon.

7. Method according to claim 6, **characterized in that** the organic solvent is an ether, in particular a cyclic ether, in particular tetrahydrofuran (THF).

8. Method according to claim 6 or 7, **characterized in that** the As₄ or P₄ is dissolved in the organic solvent in step a1) by sublimation of arsenic or phosphorus by heating the arsenic or phosphorus in an inert gas, in particular N₂ or a noble gas, and introducing the resulting As₄ or P₄ containing inert gas into the organic solvent.

9. Method according to any of claims 6 to 8, **characterized in that** step b1) comprises stirring and/or shaking of the solution together with the activated carbon for at least 10, 15, 17, 19, 21 or 23 hours.

10. Method according to any of claims 6 to 9, **characterized in that** steps a1) and b1) or a2) and b2) and/or sublimation of arsenic or phosphorus for the generation of As₄ or P₄ to be dissolved in the organic solvent in step a1) are performed in the dark.

11. Method according to any of claims 6 to 10, **characterized in that** the activated carbon is washed with a hydrocarbon, in particular n-pentane or n-hexane, after step c1) and before step d1).

12. Method according to any of claims 6 to 11, **characterized in that** step d1) is performed under vacuum.

13. Method for releasing P₄ or As₄ from the P₄ or As₄ containing storage material as specified in any of claims 1 to 5, **characterized in that** the storage material is extracted with the organic solvent or a further organic solvent.

14. Method according to claim 13, **characterized in that** the further organic solvent is carbon disulfide (CS₂), n-hexane, toluene, dichloromethane or tetrahydrofuran (THF).

15. Use of the P₄ or As₄ containing storage material as specified in any of claims 1 to 5 for storage of As₄ or P₄ in lightness and/or in air and/or for a chemical reaction of As₄ or P₄.
